# EUROPEAN PATENT SPECIFICATION

(11) **EP 3 817 970 B1**
(45) Date of publication and mention of the grant of the patent: **08.11.2023**
(21) Application number: 19739540.3
(22) Date of filing: 04.07.2019
(51) Int. Cl.: B62K 11/00, A61G 5/04, B62K 27/12

(54) **PROPULSION SYSTEM FOR CARTS TYPE VEHICLES BY USING A SELF-BALANCING SCOOTER COUPLED BY MEANS OF AN ARTICULATED STRUCTURE**
ANTRIEBSSYSTEM FÜR WAGENARTIGE FAHRZEUGE DURCH VERWENDUNG EINES SELBSTBALANCIERENDEN, ÜBER EINE GELENKIGE STRUKTUR GEKOPPELTEN ROLLERS
SYSTÈME DE PROPULSION POUR VÉHICULES DE TYPE CHARIOTS EN UTILISANT UNE PLANCHE ROULANTE AUTO-ÉQUILIBRÉE COUPLÉE AU MOYEN D'UNE STRUCTURE ARTICULÉE

(30) Priority: 05.07.2018 ES 201830676
(43) Date of publication of application: 12.05.2021
(73) Proprietor: Genius Emobility Systems S.L., 28036 Madrid Madrid (ES)
(72) Inventor: CARRASCO VERGARA, Pablo, 29017 Málaga (ES); GARCIA ROMERO, Maria del Carmen, 28034 Madrid (ES); MACIAS VECINO, Manuel Antonio, 28049 Madrid (ES)
(86) International application number: PCT/EP2019/068056
(87) International publication number: WO 2020/008018

(56) References cited:
- CN-A- 107 972 719
- GB-A- 2 539 386
- US-A1- 2013 248 573
- US-A1- 2018 141 609

## Description

This invention is applicable to any cart type vehicle steered by the person who pushes it, including trolleys, strollers, carriages, wagons, walkers or rollators, rolling chassis in general, and, in particular, manual wheelchairs, all of them hereinafter referred to as simply carts. The invention relates to an articulated structure as a device for attaching a self-balancing scooter, also known as hoverboard, to the back of a cart, allowing it to be electrically propelled. This allows the driver to push the cart effortlessly using any hoverboard, not only saving him the effort of pushing it but also transporting him at the same time. It is designed in such a way that permits steering it with the handles of the cart, just as when pushing it on foot, and operating it does not require knowing how to use the hoverboard or having the skill that would be needed for the natural use of the hoverboard.

### STATE OF THE ART

In the case of a manual wheelchair, a baby stroller, or a delivery cart or similar, which require the physical strength of the driver to propel them, the functioning is the same if they use directional fixed rear wheels, rotating on the same cart axis. Given that wheelchairs involve pushing a weight that can be quite heavy, and at times they are pushed by an elderly person or someone with limited strength, we will focus on the state of the art of electrical systems which assist in pushing wheelchairs.

There are currently numerous motorized wheelchair systems available for resolving specific problems, which improve quality of life with respect to the mobility of the wheelchair user and/or his assistant. Most of those systems are operated by the user himself, but there are cases where they are controlled by a companion or assistant. There are also some alternatives for attaching an auxiliary element containing an electric motor to a manual wheelchair. However, those are usually solutions for making a manual wheelchair autonomous, where the wheelchair user can drive the chair himself and does not need anyone to push him, unlike an assisted manual wheelchair, as in the case at hand, steered by the person who pushes it.

Oftentimes, the caregiver of an elderly or dependent person is the driver, who also can be an elderly person, such as, for example, the spouse, parent or grandparent, or may even be someone with knee, back or hip problems. This frequently limits the dependent person's opportunities to go out on long walks, visit relatives, enjoy the outdoors or simply go to the park.

For these cases, there is, for example, a solution which is an auxiliary electric motor that can be attached to the wheelchair: Powerpack, from the company TGA ELECTRIC LEISURE LTD, with patent application GB2478606. However, that solution is neither cheap nor simple to attach, but more importantly, its maneuverability is compromised because it steers the wheelchair in the direction of travel of the chair's rear wheels, meaning that additional physical effort is required for any change of direction, making it especially complicated to maneuver in closed spaces, such as a home or, for example, when entering an elevator. Moreover, it does not serve to transport the assistant, who must accompany the chair on foot, which also limits travel speed and causes certain inconvenience due to the possibility of the assistant's bumping into the chair, given that the motor occupies some of the space meant for the assistant's feet to walk and steer the chair from behind.

Recently, self-balancing scooters, such as those described in US8738278B2 and US9745013B2, have become widespread, whether as a toy or as a means of transportation, and accordingly, the purchase price of these devices has decreased considerably, making them very affordable and commonplace in many homes. This electric board operates with a rechargeable battery, due to which, it can travel at a speed of over ten kms per hour with sufficient autonomy. Given its availability and low price, it seems logical to take advantage of it to move carts, and particularly, wheelchairs.

For these purposes, a self-balancing scooter, or simply hoverboard, is understood to be an electric vehicle in the form of a board on which a person stands, which is placed according to a longitudinal axis that is perpendicular to its direction of travel, and which has two motorized wheels, one at each of its ends, permanently aligned in the direction of that longitudinal axis. It is also usually known as a two-wheel self-balancing board since when leaning forward or backward according to the axis, the motors exert a torque to counter the tilting.

The original, which corresponds to US8738278B2, is basically formed by two foot placement platforms, aligned according to that longitudinal axis on which one platform can pivot a certain degree with respect to the other, but always conforming a board-type structure where each platform consists of a flat surface or pedal on which the user places the appropriate foot. Inside them are angular sensors that enable the device to know the pitch angle of each platform, i.e., the forward tilt with respect to the horizontal plane, and which steer the hoverboard. The user can keep balance while steering it because, for example, when he shifts his weight forward, his feet cause the pitch angle of both platforms to increase, which results in an increase of the motor torque and, consequently, acceleration, which counteracts the non-verticality of the user's weight, providing balance to the man-machine system. The board is steered by moving the feet, conferring different pitch angles to each platform, so that the more the user leans forward, the faster he goes. If a platform adopts a negative pitch angle, due to tilting backwards, the relevant wheel will move backwards. That enables achieving a great deal of maneuverability in closed spaces. The board includes weight sensors which, if turned on, are activated when the user stands on the board, and disactivated when the driver steps out.

There are other self-balancing scooters that largely replicate the functioning described. For example, in the case of US9745013B2, both foot placement platforms that make up the board are built in one piece, so rather than using the relative pitch value between both platforms to turn, as in the preceding case, they measure the torsion which the user applies to that board. The result is really a similar scooter, if not at the level of industrial property, at the level of the user. Some may use accelerometers, other gyroscopes, strain gauges, optical and other types of sensors, or combinations of them, but all of them are encompassed in the family of self-balancing boards, self-balancing scooters, or simply hoverboards.

Different solutions may be found on the internet for using self-balancing scooters for pushing a wheelchair steered by a companion/assistant, such as "http://wheelpower.strikingly.com/". This uses an auxiliary structure to attach a hoverboard to the back of a wheelchair, but also to carry the wheelchair, given that to provide the entire system with steering control, it needs to be lifted so that the back wheels of the chair do not touch the ground. That entails several disadvantages:
- It disables the natural braking system of the wheelchair, normally located at the rear wheels, making it necessary to install an alternative brake system so that when the hoverboard is inactive, the chair does not pose a risk;
- It overloads the hoverboard which, being designed to bear the weight of a single person, must now bear the weight of two;
- It greatly complicates going up and down curbs, small steps and sidewalks and, in general, any irregularity on the pavement, which the chair might bump into;
- It needs a resistant and, therefore, relatively heavy structure to carry the weight of the user and of the chair, making it necessary to deal with the extra weight of this structure, for example, every time the chair is loaded into a car and, in general, whenever the system needs to be attached or removed from the wheelchair;
- In order to attach the structure to the wheelchair, the back of the chair must be lifted up to place it on the platform, which means either the assistant must lift the chair with its own weight and that of the person sitting in it, or the user must get out of the chair during assembly in order to make it lighter;
- Steering control is not done naturally by placing the hands on the wheelchair's handles, but with manual levers that activate the hoverboard's steering system, which makes it less intuitive and means that the assistant does not hold onto the chair with his hands, creating an antinatural and dangerous situation when using the wheelchair.

As well, there are some patents for pushing carts using a hoverboard, but none of these inventions solves the technical problem of the driving of the car without lifting it once it has been coupled to a hoverboard, which is provided with its own and very particular steering system with its two wheels aligned on a single axis:
US9744095 uses an auxiliary structure to attach a hoverboard to the back of a walker, but also to carry it, given that to provide the entire system with steering control, it needs to be lifted at its back so that the back wheels of the walker do not touch the ground. In this case the user doesn't handle on the walker for steering, but just use his/her feet, using the hoverboard steering.
CN106034544 relates to a pusher by hoverboard for a hay mower, but does not solve the problems of the direction, being the hoverboard steered by feet at the same time the hay mower steering is handles by hands in the handlebar, having therefore some difficulties for staying in the desired path, requiring much skill for maintaining a trajectory for the pushed and pusher vehicles at the same time, and further, mechanically, it stresses on the joints for which the hoverboard has not been designed.
CN105836015 relates to a push rod for coupling a hoverboard to a cart, which is driven with the feet, not with the handlebar, and is done in reverse, that is, for the cart to turn right, the hoverboard has to make it left. That would not be too negative if it did not imply an intrinsic instability to the system, which requires a permanent correction even to maintain a straight line trajectory.

Another propulsion system for carts is known from US 2018/141609 A1. Lastly, worth noting is patent US9688340B1 which is an accessory for a hoverboard with bindings on its platforms, giving the board a new use by converting it into a kind of go-kart.

### SUMMARY OF THE INVENTION

The invention is defined by the appended claims and consists of a propulsion system for carts whereby a self-balancing scooter is attached at the rear by means of an articulated structure. Said scooter, to which we will refer as a hoverboard, not only provides thrust and speed control to the cart but is also the means of transportation for the person who steers it. The person can operate the cart in the same way as when it is used in its natural state, that is, using the handles to turn, raise up the front wheels, and get up and down curbs or over small obstacles, and also using the brake of the cart. It is not necessary to know how to use a hoverboard in order to operate this invention or to have the skills which would normally be required to use one, because the control arms not only provide stability but also they control the steering of the hoverboard.

In general, we will refer to the person who pushes the cart as the user, which in the case of a wheelchair would be the assistant. The invention applies preferably to carts with rear wheels rotating on the same axis, but it is not confined only to such vehicles.

This invention comprises two bindings at both ends of the hoverboard, each one integral with one of the two platforms comprising the hoverboard, and two control arms, each one connected, by means of a first articulated joint, to one of those bindings, which are used to push and pull on the cart's chassis for propelling, speed control and braking, but us well at the same time are pushing and pulling on said bindings, making the two platforms to adopt different pitch angles.

Each of these bindings has at least one connecting point for said first articulated joint, preferably located above the foot placement area, that is, the flat surface of the respective platform where the user stands. The first articulated joint must always be positioned above the longitudinal axis of the hoverboard, such that when the control arms push and pull on the bindings to the hoverboard, they exert pitching on the respective platform which make one wheel advance more than the other, meaning that the control arms are what steer the hoverboard such that it stays on the cart's trajectory. The bindings are located preferably near the wheels, to leave the largest amount of space possible for the user's feet.

Other important benefit of having the connecting points above said longitudinal axis is the proportionality between the hoverboard's thrust and throttle effort exerted by the feet of the driver for making the foot placement platforms to reduce their pitch angle, acting against the control arms pushing.

Each of the control arms is provided with at least one connecting element for forming an articulated joint at each of its ends, the first connecting element being attached to the corresponding binding through said first articulated joint, the second connecting element capable to attach to the cart. For this purpose, the cart must be provided with one or more anchor points capable of forming a second articulated joint with respective second connecting elements. They can be anchor points which already exist on the cart, such as, for example, holes drilled in its structure, or anchor points coupled specifically for this application to the chassis, such as, for example, by using clamps, or integrated into a new member added to the chassis by suitable fastening means. These second articulated joints must be located sufficiently centered with respect to the cart's wheels such that both control arms geometrically converge from each end of the hoverboard in the direction to the cart.

In a preferred embodiment, said anchoring points are located in a transverse member formed by a transverse arm engageable to the chassis of the cart by means of suitable fastening means, which could use holes drilled on the chassis, or for example whichever post-mount fixations. Thus, this attachable transverse arm can be provided with multiple options for anchor points, and may also take different lengths, in a sufficient range, so that it can be coupled to the frame structures of different carts, and for this purpose, it must be provided with suitable fastening means. Depending on how is the chassis to which is going to be coupled, said transverse arm, according to the invention, it can be located behind the axis of the rear wheels of the cart, for example, to accommodate the space that may eventually require access to a brake pedal already existing on the cart.

For a correct operation, the cart, when stationary, should be able to turn right and left on flat ground without dragging the hoverboard, which is its ideal functioning, or at least minimizing that effect, so that the cart's steering is sufficiently decoupled to the thrust of the hoverboard. To achieve this, when engaged with respective control arms, the hoverboard yaw pivoting center respect to the cart must be geometrically as closely as possible to the rotation center of the cart when the cart is stationary. In the case of directional fixed wheels, that is to say a cart whose wheels rotate on the same cart axis, said rotation center corresponds to the vertical on the midpoint between said wheels. Moreover, in the case of a cart with all its wheel being swivel wheels, such as a shopping cart, said rotation center corresponds to the vertical axis containing its center of mass when the cart is loaded. In this case of a cart with swivel wheels, as it does not have guide wheels, the hoverboard's steering would dominate.

In practice, for ideal functioning both control arms must converge, pointing to the vertical through that rotation center when the cart is stationary, thus giving the system a pivot center around that vertical axis. This is achieved either with an actual pivot center, ideally one with a single anchor point located on the vertical over the rotation center when the cart is stationary, where both second articulated joints coincide, or with a virtual pivot center, when both control arms converge, connecting their respective connecting elements with those anchor points of the cart, which permit them to point to the position of the rotation center of the cart when stationary.

In this regard, for example, in the case of a cart whose rear wheels rotate around the same axis, and a transverse member is also used which is behind that axis, when the cart moves in a straight line - the longitudinal axis of the hoverboard - that transverse member and both control arms will form a trapeze, with the arms preferably pointing in the direction of the vertical through the midpoint between the rear wheels of the cart.

In that case, when the cart is moving and it perform a turn, the axis on which the rear wheels rotate and the longitudinal axis of the hoverboard will no longer be parallel. Due to the fact that those control arms are articulated to the hoverboard above their corresponding platform, curves can be maneuvered stably and gently while the cart moves forward: as the pivot center, which corresponds to the midpoint between the cart's wheels, is displaced laterally following the trajectory chosen by the driver, the control arms will be subjected to asymmetrical forces, such that the arm that is on the outside of the curve at that time will have less compression, or better traction, than the arm on the inside of the curve, thereby generating pitching on both platforms that will make one wheel advance more than the other, thus accelerating the side of the hoverboard that is on the outside with respect to the other, so that the cart continues its course, thus adapting to each new position of that pivot center during its journey. And once the driver decides to advance in a straight line, the efforts in both control arms start levelling out and the speed of both ends of the hoverboard becomes the same, as the hoverboard is steered in the same direction as the cart.

If a hoverboard is used to push a cart having its own steering system, for example, in the front wheels, the cart could not normally rotate when stationary, unless it is forced to pitch up to pop a wheelie in order to lift the guide wheels from the floor, so that its rotation center when stationary would once again be the vertical through the midpoint between its rear wheels.

Thus, the hoverboard only substitutes the physical effort of the driver or assistant to go forward, go backwards or brake, but the control of the steering remains in the most natural way in the hands of the driver, who will make the cart turn left or right, at the angle needed to steer the cart, just as when pushing it on foot.

To go forward and backwards, the hoverboard pushes and pulls the cart by means of the control arms, but also due to the driver's holding the handles, given that if the driver pushes, for example, with his only other support points being his feet, he will exert a backwards reaction force on the hoverboard while his body will lean toward the cart, provoking a pitch angle on the hoverboard's platforms which will deliver power to it. In this way, moving forward in a straight line is very natural for someone who does not know how to operate a hoverboard, since, to operate a wheelchair, for example, you merely need to push the handles, but now that action is performed without effort.

As it is not necessary to replace any of the wheels of the cart, or the wheelchair, which maintain their natural function, the driver can raise the front wheels during movement, popping a wheelie to go over obstacles like curbs, slopes on the sidewalk, etc., being this operation easier than when pushing manually that usually requires the driver to step on the chassis near the rear axis to counterbalance with the handlebar the effort for raising the front. With this invention, the control arms make that counterbalance function.

The bindings can either be an integral part of each platform, or can be anchored or tied to them, such as those included in the aforementioned patent US9688340B1, but they can also be formed by brackets partially attached to each platform which, being when the user steps on these brackets when each binding and platform become actually integral to each other.

Since the function of each binding is to provide to the respective platform of the hoverboard at least one connecting point above it from which it can pull and push a control arm so that the hoverboard can follow the course of the cart, it is also an object of the present invention to provide a self-balancing scooter whose foot placement platforms, whether independent like in the original hoverboard, or joined together as a unit, include at least one connecting point, located near the end of the hoverboard and above the foot placement area of the pedal, that is, the flat area of the platform on which the user stands, where the respective control arms can be attached such that it can be used for pushing a cart.

In a broad sense, it is an object of the present invention to provide an electric vehicle, for a person to stand, which is placed along a longitudinal axis perpendicular to the direction in which that vehicle moves; which at each end has at least one driving wheel, the wheels being permanently oriented to rotate in the direction of that longitudinal axis; which at both sides of the vehicle is also provided with a foot placement platform, both platforms can be either independent, although aligned according to said longitudinal axis, or integral; and acting like a pedal, the pitch angle of said platforms, whether due to displacement, orientation, speed, acceleration, force, pressure, etc., is what is responsible for generating torque; wherein each platform includes at least one connecting point located near its respective end of the vehicle and above the foot placement area, to be able to attach a control arm, so that this vehicle can be used for pushing a cart.

If the two platforms are independent, when the cart is being steered, the control arms will modify the relative pitching angle between the two platforms, thus causing different rotation speeds on both wheels, so that the hoverboard follows the cart's trajectory. If the two platforms are joined together, in the different situations of functioning while steering the cart, the control arms will apply traction-compression forces, resulting in torsion between both platforms, causing a difference of rotation speed between both wheels, so that the hoverboard follows the cart's trajectory.

Moreover, it is another object of the present invention to provide a cart with anchor points the purpose of which is to form either two articulated joints or a double articulated joint, with two control arms to attach to a self-balancing scooter, with those anchor points being positioned such that a control arm can be connected on each side, on the outside of the driver's feet, pointing approximately towards the vertical through the pivot center of the cart when stationary, which in the case of a cart whose rear wheels rotate around the same axis, is the midpoint between those rear wheels.

An important advantage of this invention is that in order for it to be applied to a wheelchair, the wheelchair does not need to be modified, at least not significantly. In this regard, a hoverboard can be attached to one wheelchair now and then to another one later. Due to that, it provides a simple and economical way to assist people who have the strenuous task of transporting or moving individuals with reduced mobility, without having to significantly modify the wheelchair or acquire a new one. As it may be adapted to many types of chairs and carts, it can be used by people whose job it is to move various individuals in a variety of wheelchairs in hospitals, special education schools, assisted-living residences, day centers, train stations or airports, for example.

In addition, for those more or less collapsible wheelchairs which must frequently be loaded into a car, the invention provides electrical assistance which does not adversely affect the ease of loading and unloading the chair for transport.

Furthermore, it is easy to find self-balancing scooters in almost all homes. Therefore, this invention also permits giving a new use to these devices for the family members who cannot enjoy their benefits.

This invention can also be used to push work carts in spaces such as factories and warehouses, or leisure or sports facilities, for example, delivery carts or even golf carts.

As we have seen, there are currently options for a disabled person to have access to some technology for moving his wheelchair. The main problem is that the aforementioned solutions for motorizing wheelchairs can be very expensive, requiring changing the wheelchair, and they are not interchangeable. With the present invention, any person who owns a hoverboard can take another person out in a wheelchair, and even various persons with different types of wheelchairs, as well as apply it to baby strollers.

As providing a separate system from the cart and from the actual hoverboard, and as it does not require modifying either one of them, it also permits using both of those devices independently. You can, for example, attach it a wheelchair in order to take a person to a day center, then disengage it and use the hoverboard as a mode of transport to get back home.

The application of the present invention can be improved by combining it with a system to extend its autonomy by using external batteries, in addition to those of the hoverboard, or even better, substituting them. In this case, we just keep for this hoverboard the pusher function, so that we could referred to it as hoverpusher, considering it more a tool for mobility than a toy such as hoverboards can be considered today. These batteries could be compatible with those very well-known used for e-bikes, very easy for buying them worldwide. The batteries could be attached to the cart or, for example, carried by the user in a backpack. Having a product without internal batteries, improves not only the price but also the weight of the product, and maybe more important, it improves safety especially for transport, for example for wheelchair when users travel by plane. In case of wheelchairs, reducing the weight it is also really important: for all those operations for going into and out from a car, or just for example, connecting and disconnecting the hoverboard every time at home. Another advantage for not having internal batteries is to go for charging without the whole hoverboard, as well as to be able to use a spare batteries pack while the other is plugged in for charging.

In order to use external batteries, the hoverboard must be provided with a proper electric connector to the outside.

### BRIEF DESCRIPTION OF THE FIGURES

FIG. 1 and FIG. 2 depict, respectively, a perspective and plan view of a preferred embodiment of this invention, attaching a self-balancing scooter (2) to a cart (1), which in this case is a wheelchair, through two control arms (31, 32) which converge, pointing to the midpoint between the rear wheels of the cart (1), being connected to the cart's chassis through a transverse member (10) attached to it, at two anchor points (11) forming two articulated joints (2131, 2132), separate from each other and which are located behind that midpoint.
FIG. 3 shows more in detail the coupling between the hoverboard and the wheelchair of FIG. 1, where it is seen how both control arms (31, 32) are connected to their respective bindings (21, 22) corresponding to each platform (201, 202) of the hoverboard, by means of respective articulated joints (1231, 1232) located above their respective pedals or surface areas where the user steps on each platform.
FIG. 4 depicts an exploded view of the articulated structure of FIG.1, showing the main elements composing the embodiment.
FIG. 5 depicts a perspective view of another preferred embodiment, in which both control arms (31, 32) are connected to a single anchor point (11) which is exactly in the vertical through the midpoint between both wheels of the cart (1), so that the articulated joints of both arms coincide at that point (2131, 2132).

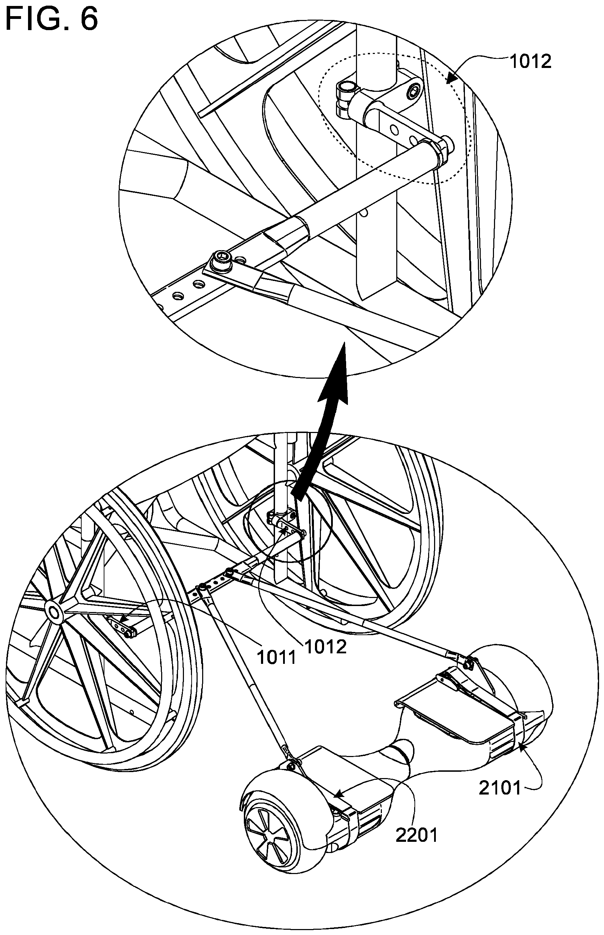

FIG.6, in an alternative embodiment of the invention, shows post-mount fastening means (1011, 1012) for coupling a transverse arm (10) to the cart (1); also shows straps (2101, 2201) as a means of restraint for the bindings.

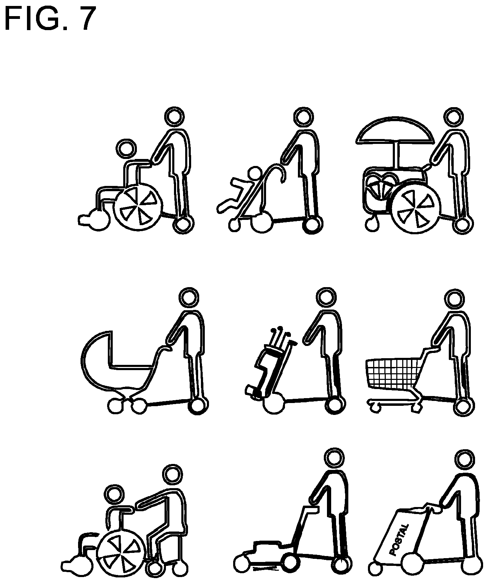

FIG.7 shows schematically some of the different applications of this invention.

### DETAILED DESCRIPTION OF A PREFERRED EMBODIMENT

A preferred embodiment of the present invention is to provide an articulated structure for attaching a self-balancing scooter (2) to the back of a cart (1), e.g. a wheelchair, to propel it by pushing and, in turn, to transport the driver-user. In this preferred embodiment, the cart to be pushed has two parallel rear wheels that rotate about a same axis.

This embodiment comprises two bindings (21, 22) to be coupled to become integral with each of the two platforms (201, 202) that shape the hoverboard (2). Said bindings will preferably be provided with sufficient flat surface, forming a kind of bracket, such that the user steps on them rather than directly on the pedals of the hoverboard's platforms, providing stability to their coupling. Also preferably, these bindings may be adjustable in length to be able to adapt to different sizes of hoverboards such that they always effectively embrace each platform, although they may also have straps (2101, 2201) or other means of restraint.

It also comprises two control arms (31, 32) for pushing and pulling the chassis of the cart, or wheelchair (1). Given that, ideally, this articulated structure must be able to adapt to different carts, and that the aim is always for the user's posture to be as natural as possible while steering it, in order to ensure that the distance to the handles is correct, the appropriate length of those control arms (31, 32) is going to be different from one cart to another. Therefore, control arms (31, 32) adjustable in length or arm sets of different lengths for different applications should preferably be provided.

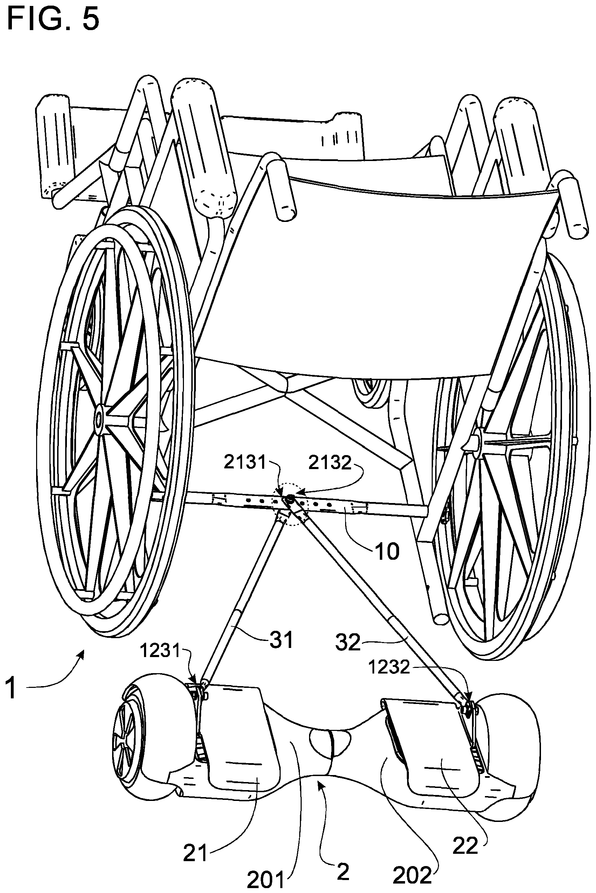

Each of the bindings (21, 22) has at least one hole as a connecting point (211, 221) for a first articulated joint (1231, 1232) by hinge, located above the flat foot placement area of its respective foot placement platform of the hoverboard and, preferably, close to the wheel of the hoverboard, to leave as much space as possible for the user's feet. That first articulated joint (1231, 1232) connects each binding (21, 22) by hinge with one of the control arms (31, 32). Each control arm (31, 32) has at each end at least one hole as a connecting element (311, 321, 312, 322) to form a hinge joint: for connecting each first connecting element (311, 321) to a connecting point (221, 222) on its respective binding (21, 22) through that first articulated joint (1211, 1221); and for connecting each second connecting element (312, 322) to the cart (1) also by means of a hinge, whether in two second articulated joints (2131, 2132) more or less close to each other, or both connections coinciding to form a double articulated joint, as in the case of FIG.5.

Thus, the cart (1) must be provided with one or more anchor points (11), capable of forming a second articulated joint (2131, 2132) with their respective second connecting elements (312, 322) corresponding to the control arms (31, 32). These anchor points must be positioned more or less centered between the rear wheels of the cart, and preferably located on a transverse member which, although it can be some component of the cart's chassis, will preferably be composed by a rotatable transverse arm (10) attached to the cart, which may be joined to the cart's chassis by suitable fastening means (1011, 1012). Said transverse arm (10) can rotate on its longitudinal axis, such that both control arms (31, 32) can move upwards and downwards, not only to adopt the different positions necessary within the range of use of the cart (1), such as, for example, to raise the front wheels, or to afford a sharp change of the slope, but also to be able to potentially fold this structure when dismounting the hoverboard. In addition, said transverse arm (10) may preferably adopt different lengths to be coupled to different carts chassis. The transverse arm (10) has multiple holes as optional anchor points (11) by hinge, such that the control arms (31, 32) can always converge, pointing in the appropriate direction of the specific cart on which the invention will eventually be used.

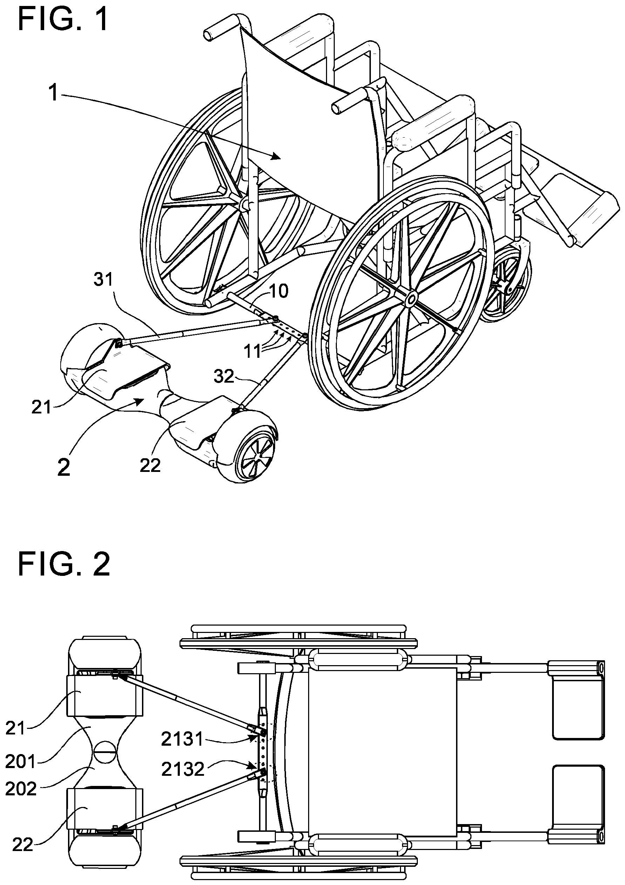

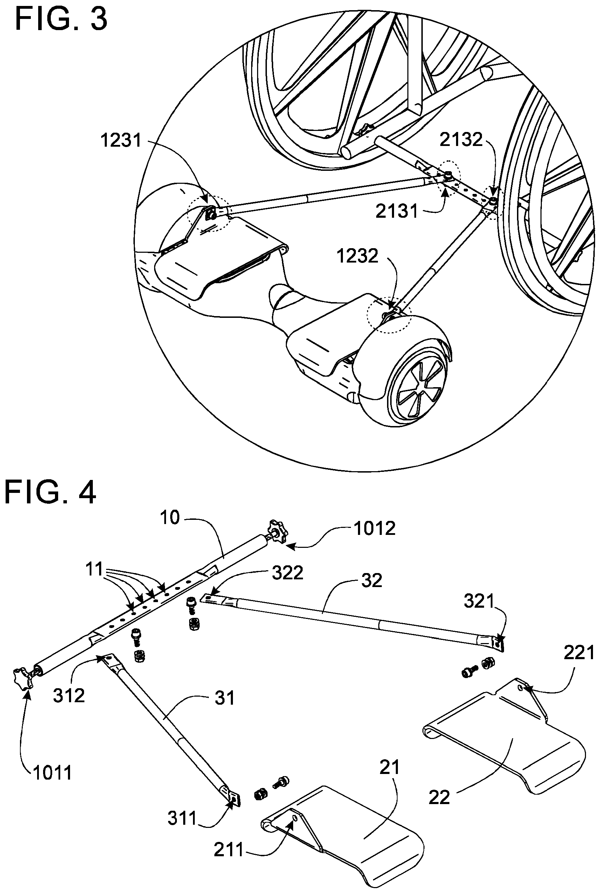

Said transverse arm (10) can be located within the vertical plane containing the axis of the rear wheels of the cart (1), as shown in FIG.5 , but as a convenience, that transverse arm (10) can also be located outside that plane, for example, behind the axis of the rear wheels of the cart (1), as shown in FIG.1, FIG. 2 and FIG. 3, whether for ease of attachment to the chassis of the cart (1), particularly to respect the space that may be needed to access an already existing brake pedal on the cart (1), or for any other reason. In that case, it is preferable to use the anchor points (11) that permit both control arms (31, 32) to point to the vertical through the midpoint between the rear wheels. In general, in the plan view, the projections of the longitudinal axes of those control arms (31,32) should cross as closely as possible to the rotation center of the cart (1) when the cart (1) is stationary.

### OTHER EMBODIMENTS

Regarding to the above described embodiment of the present invention, other modifications can be used without deviating from the scope of this invention as defined by the appended claims. For example, some or all of the articulated joints can be made using flexible parts. Also, the size, form, placement or orientation of the different components can vary. The components shown, which are directly connected or in contact with each other, can have intermediate elements placed between them. The functions of one element can be performed by two, and vice-versa. Therefore, the scope of the invention shall not be limited by the specific embodiments disclosed.

This invention not only applies to four-wheel carts; rather its dynamic is valid for any other vehicles, regardless of its number of wheels, meaning that it is valid for moving a for example, wheelbarrow, a scooter, a skate, a single wheel skate, or even a sleigh.

It also applies to vehicles with wheels that rotate on fixed axes which therefore always move forward in a straight line, such as a lawnmower, whose front wheels must be lifted up in order to turn it. In that case, preferably, both control arms should point approximately to the vertical through the midpoint between its rear wheels.

In the case of vehicles with swivel wheels, both rear and front, like shopping carts in supermarkets, in addition to the case described above, one or more elements could also be applied to limit that freedom of the rear wheels by forcing them to rotate parallel around a same axis.

This invention is also valid where the driver does not stand on the hoverboard but rather rides on a seat-type accessory attached to it.

Although the foregoing description refers to coupling a hoverboard to propel a manual cart, this invention also applies if the hoverboard is connected to an already motorized cart or, for example, to another hoverboard.

## Claims

1. Propulsion system for cart type vehicles, hereinafter referred to as carts (1) comprising a self-balancing scooter, or hoverboard (2), which is a transport means for the driver, such that the hoverboard (2) is attachable to the rear of a cart (1) by means of an articulated structure for propelling and speed control; the propulsion system, comprising:
- two control arms (31, 32);
- one or more anchor points (11) mountable on the chassis of said cart (1);
- two bindings (21, 22) on both sides of the hoverboard, each one integrally mountable on one of the two foot placement platforms (201, 202) of the hoverboard (2);
wherein:
- each of said bindings (21, 22) has at least one connecting point (211, 221) located above the foot placement area of the corresponding foot placement platform (201, 202) of the hoverboard (2);
- each of the control arms (31, 32) is provided with at least one first connecting element (311, 321) at one of its ends, and, at its other end, with at least one second connecting element (312, 322);
- each control arm (31, 32) is connected to its corresponding binding (21, 22) through a first joint (1231, 1232) where a connecting point (211, 221) is joined to said first connecting element (311, 321);
- each control arm (31, 32) connectable to the cart (1) through a second joint (2131, 2132) connecting one of said anchor points (11) with said second connecting element (312, 322);
**characterized in that**:
both first joints (1231, 1232) are articulated and
both second joints (2131, 2132), which may coincide in a single anchor point (11), are articulated and can be located sufficiently centered with respect to the wheels of the cart such that both control arms (31, 32) geometrically converge from each side of the hoverboard (2) in the direction to the cart (1).

2. Propulsion system for carts according to claim 1, wherein both control arms (31, 32) converge pointing approximately towards the rotation center of the cart (1) when the cart (1) is stationary.

3. Propulsion system for carts according to claim 2, wherein said anchor points (11) are comprised in a transverse arm (10) that can be attached to the chassis of any cart (1), and wherein said transverse arm (10) includes multiple anchor points (11) to enable attaching the hoverboard (2) such that both second articulated joints (2131, 2132), which can coincide in a single anchor point (11), are located sufficiently centered with respect to the wheels of the cart (1) such that both control arms (31, 32) can always converge, pointing in the appropriate direction of the specific cart (1) on which the propulsion system will be used.

4. Propulsion system for carts according to claim 3, wherein said transverse arm (10) can rotate on its longitudinal axis, such that both control arms (31, 32) can move upwards and downwards.

5. Propulsion system for carts according to claim 1, wherein each of the two foot placement platforms (201, 202) includes at least one connecting point (211, 221) located above the foot placement area and near the corresponding end of the hoverboard (2), in order to attach a control arm (31,32) by means of a corresponding first articulated joint (1231, 1232) for pushing a cart (1), **characterized in that** it is provided with at least one electric connector for external batteries.

6. Propulsion system for carts according to claim 5, **characterized in that** the hoverboard (2) is not provided with internal batteries therefore improving its safety, price and weight as a product for pushing a cart.

7. A cart type vehicle (1) arranged to include a propulsion system for carts according to claim 1, comprising anchor points (11) to form either two articulated joints (2131, 2132) or a double articulated joint, connected to two control arms (31,32) to attach a hoverboard (2), being said anchor points (11) sufficiently centered such that both control arms (31,32) converge geometrically from both sides of the hoverboard (2) pointing to the rotation center of the cart (1) when the cart (1) is stationary.

## Patentansprüche

1. Antriebssystem für wagenartige Fahrzeuge, die hier im Folgenden als Wagen (1) bezeichnet werden, mit einem selbstbalancierenden Roller oder Hoverboard (2), der ein Transportmittel für den Fahrer ist, so dass das Hoverboard (2) an der Rückseite eines Wagens (1) mittels einer gelenkigen Struktur zur Antriebs- und Geschwindigkeitsregelung befestigbar ist, wobei das Antriebssystem umfasst:
- zwei Steuerarme (31, 32);
- eine oder mehrere auf dem Fahrgestell des Wagens (1) montierbare Ankerpunkte (11),
- zwei an beiden Seiten des Hoverboards angeordnete Bindungen (21, 22), die jeweils vollständig an einer der beiden Fußaufsetzplattformen (201, 202) des Hoverboards (2) befestigt werden können,
wobei:
- jede dieser Bindungen (21, 22) mindestens eine Verbindungsstelle (211, 221) oberhalb des Fußaufsetzbereichs der entsprechenden Fußaufsetzplattform (201, 202) des Hoverboards (2) aufweist;
- jeder der Steuerarme (31, 32) an einem seiner Enden mindestens ein erstes Verbindungselement (311, 321) und an seinem anderen Ende mindestens ein zweites Verbindungselement (312, 322) aufweist,
- jeder Steuerarm (31, 32) über ein erstes Gelenk (1231, 1232) mit seiner entsprechenden Bindung (21, 22) verbunden ist, wo eine Verbindungsstelle (211, 221) an dieses
erste Verbindungselement (311,
321) angeschlossen ist,
- jeder Steuerarm (31, 32)
an den Wagen (1)
angeschlossen werden kann,
und zwar durch eine
Schnellverbindung (2131, 2132), die einen der besagten Ankerpunkte (11) mit dem zweiten Verbindungselement (312, 322) derart verbindet, dass:
--die beiden ersten Gelenke (1231, 1232) gelenkig sind und
-die beiden zweiten Gelenke (2131, 2132), die in einem einzigen
Ankerpunkt (11) zusammenfallen können, gelenkig sind und ausreichend zentriert zu
den Laufrädern des Wagens ausgerichtet erden können, so dass beide Steuerarme (31, 32) geometrisch von jeder Seite des Hoverboards (2) zum Wagen (1) zusammenlaufen. Antriebssystem für Wagen nach Anspruch 1, wobei beide

2. Steuerarme (31, 32) bei stehendem Wagen (1) etwa zum Drehzentrum des Wagens (1) weisend zusammenlaufen.

3. Antriebssystem für Wagen nach Anspruch 2, wobei die Verankerungspunkte (11) in einem Querarm (10) enthalten sind, der an dem Fahrgestell eines beliebigen Wagens (1) befestigt werden kann, und wobei der Querarm (10) mehrere Verankerungspunkte (11) aufweist, um die Befestigung des Hoverboards (2) zu ermöglichen, so dass die beiden zweiten Gelenke (2131, 2132), die in einem einzigen Verankerungspunkt (11) zusammenfallen können, ausreichend zentriert zu den Rädern des Wagens (1) angeordnet sind, so dass beide Steuerarme (31, 32) immer zusammenlaufen können und in die entsprechende Richtung des spezifischen Wagens (1) weisen, an dem das Antriebssystem verwendet wird.

4. Antriebssystem für Wagen nach Anspruch 3, wobei der Querarm (10) auf seiner Längsachse rotieren kann, so dass sich beide Steuerarme (31, 32) nach oben und unten bewegen können.

5. Antriebssystem nach Anspruch 1, wobei jede der beiden Fußaufsetzplattformen (201, 202) mindestens einen Verbindungspunkt (211, 221) aufweist, der oberhalb des Fußaufsetzbereichs und nahe dem entsprechenden Ende des Hoverboards (2) angeordnet ist, um einen Steuerarm (31, 32) mittels eines entsprechenden ersten beweglichen Gelenks (1231, 1232) zum Schieben eines Wagens (1) anzubringen, **dadurch gekennzeichnet, dass** er mit mindestens einem elektrischen Anschluss für externe Batterien versehen ist.

6. Wagenantriebssystem nach Anspruch 5, **dadurch gekennzeichnet, dass** das Hoverboard (2) nicht mit internen Batterien ausgestattet ist, so dass seine Sicherheit verbessert wird, und Preis und Gewicht einem Produkt zum Schieben eines Wagens entsprechen.

7. Wagenartiges Fahrzeug (1) mit einem Antriebssystem für Wagen nach Anspruch 1 mit Ankerpunkten (11), um entweder zwei bewegliche Gelenke (2131, 2132) oder ein doppeltes bewegliches Gelenk zu bilden, die mit zwei Steuerarmen (31, 32) verbunden sind, um ein Hoverboard (2) anzubringen, wobei die Ankerpunkte (11) ausreichend zentriert sind, so dass beide Steuerarme (31, 32) geometrisch von beiden Seiten des Hoverboards (2) zusammenlaufen, die bei stehendem Wagen (1) zum Drehzentrum des Wagens (1) weisen.

## Revendications

1. Système de propulsion pour véhicules de type chariot, ci-après les « chariots » (1), comprenant un scooter auto-équilibrant, ou hoverboard (2), qui est un moyen de transport pour le conducteur, de telle sorte que le hoverboard (2) peut être fixé à l'arrière d'un chariot (1) au moyen d'une structure articulée aux fins de la propulsion et du contrôle de la vitesse ; le système de propulsion, comprenant :
- deux bras de commande (31, 32) ;
- un ou plusieurs points d'ancrage (11) pouvant être montés sur le châssis dudit chariot (1) ;
- deux fixations (21, 22) de part et d'autre du hoverboard, chacune pouvant être intégralement montée sur l'une des deux plateformes pour poser les pieds (201, 202) du hoverboard (2) ;
où :
- chacune de ces fixations (21, 22) comporte au moins un point de connexion (211, 221) situé au-dessus de la zone pour poser les pieds de la plateforme pour poser les pieds correspondante (201, 202) de l'hoverboard (2) ;
- chacun des bras de commande (31, 32) est équipé d'au moins un premier élément de connexion (311, 321) à l'une de ses extrémités, et, à son autre extrémité, d'au moins un deuxième élément de connexion (312, 322) ;
- chacun des bras de commande (31, 32) est relié à sa fixation correspondante (21, 22) par l'intermédiaire d'une première articulation (1231, 1232) sur laquelle un point de connexion (211, 221) est relié au premier élément de connexion correspondant (311, 321) ;
- chacun des bras de commande (31, 32) pouvant être connecté au chariot (1) via une seconde articulation (2131, 2132) reliant l'un desdits points d'ancrage (11) avec ledit deuxième élément de connexion (312, 322) ; **caractérisé en ce que** :
-- les deux premières articulations (1231, 1232) sont articulées, et
- les deux deuxièmes articulations (2131, 2132), qui peuvent coïncider en un seul point d'ancrage (11), sont articulées et peuvent être situées suffisamment centrées par rapport
aux roues du chariot, de telle sorte que les deux bras de commande (31, 32)
convergent géométriquement de chaque côté du hoverboard (2) dans le sens du chariot (1). Le même système de propulsion que la revendication 1, où les deux

2. bras de commande (31, 32) convergent vers le centre de rotation du chariot (1) lorsque le chariot (1) est à l'arrêt.

3. Le même système de propulsion pour chariots que la revendication 2, où lesdits points d'ancrage (11) sont intégrés dans un bras transversal (10) qui peut être fixé au châssis de tout chariot (1), et où ledit bras transversal (10) comprend plusieurs points d'ancrage (11) pour permettre la fixation du hoverboard (2), de telle sorte que les deux deuxièmes articulations articulées (2131, 2132), qui peuvent coïncider en un seul point d'ancrage (11), sont suffisamment centrées par rapport aux roues du chariot (1), de telle sorte que les deux bras de commande (31, 32) peuvent toujours converger, pointant dans le sens approprié du chariot spécifique (1) sur lequel le système de propulsion sera utilisé.

4. Le même système de propulsion que la revendication 3, où ledit bras transversal (10) peut tourner sur son axe longitudinal, de telle sorte que les deux bras de commande (31, 32) peuvent se déplacer vers le haut et vers le bas.

5. Le même système de propulsion pour chariots que la revendication 1, où chacune des deux plateformes pour poser les pieds (201, 202) comprend au moins un point de connexion (211, 221) situé au-dessus de la zone pour poser les pieds et à proximité de l'extrémité correspondante du hoverboard (2), afin de fixer un bras de commande (31,32) à l'aide d'une première articulation articulée correspondante (1231, 1232) pour pousser un chariot (1), **caractérisé par le fait qu'**il est fourni avec au moins un connecteur électrique pour batteries externes.

6. Le même système de propulsion que la revendication 5, **caractérisé par le fait que** le hoverboard (2) n'est pas fourni avec des batteries internes, améliorant ainsi sa sécurité, son prix et son poids comme produit destiné à pousser un chariot.

7. Le même véhicule de type chariot (1) aménagé pour comporter un système de propulsion pour chariots que la revendication 1, comprenant des points d'ancrage (11) pour former soit deux articulations articulées (2131, 2132), soit une double articulation articulée, reliée à deux bras de commande (31,32) pour fixer un hoverboard (2), étant dit que les deux points d'ancrage (11) sont suffisamment centrés, de telle sorte que les deux bras de commande (31,32) convergent géométriquement des deux côtés du hoverboard (2) en pointant vers le centre de rotation du chariot (1) lorsque le chariot (1) est à l'arrêt.
